## Europäisches Patentamt
## European Patent Office
## Office européen des brevets

(11) Veröffentlichungsnummer: **0 235 674**
A1

# EUROPÄISCHE PATENTANMELDUNG

(21) Anmeldenummer: **87102270.3**

(22) Anmeldetag: **18.02.87**

(51) Int. Cl.⁴: **F 02 G 5/02,** F 02 B 63/04, F 01 K 23/14

(30) Priorität: **04.03.86 CH 882/86**

(43) Veröffentlichungstag der Anmeldung: **09.09.87 Patentblatt 87/37**

(84) Benannte Vertragsstaaten: **DE FR GB IT NL**

(71) Anmelder: **GEBRÜDER SULZER AKTIENGESELLSCHAFT, Zürcherstrasse 9, CH-8401 Winterthur (CH)**

(72) Erfinder: **Welle, Manfred, Rehweg 37, CH-8400 Winterthur (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

(54) **Schiffsantriebsanlage mit einem ein Bordnetz speisenden elektrischen Generator.**

(57) Die Anlage weist als Antrieb eine nach dem Dieselverfahren arbeitende, mit dem Schiffspropeller (4) gekuppelte Zweitakt-Hubkolbenbrennkraftmaschine (1) auf. Der elektrische Generator (13) bezieht seine Antriebsenergie aus der Hubkolbenbrennkraftmaschine (1), wobei der Generator über ein Untersetzungsgetriebe (12) von einer Nutzleistungsgasturbine (7) angetrieben wird. Ein aus Pumpe (17) und Motor (18) bestehendes, zwischen die Brennkraftmaschine (1) und den Generator (13) geschaltetes hydrostatisches Getriebe dient hauptsächlich zum Regeln der Frequenz des Generators.

Durch diese Anlage wird der Wirkungsgrad für die Leistungsübertragung von der Schiffsantriebsmaschine zum Bordnetz wesentlich verbessert.

P.6029/St/td

Gebrüder Sulzer Aktiengesellschaft, Winterthur (Schweiz)

Schiffsantriebsanlage mit einem ein Bordnetz speisenden elektrischen Generator

Die Erfindung bezieht sich auf eine Anlage zum Antrieb eines Schiffes mittels einer nach dem Dieselverfahren arbeitenden, mit dem Schiffspropeller gekuppelten Zweitakt-Hubkolbenbrennkraftmaschine, mit einem ein Bordnetz speisenden elektrischen Generator, der seine Antriebsenergie aus der Hubkolbenbrennkraftmaschine bezieht, wobei ein aus Pumpe und Motor bestehendes, von der Brennkraftmaschine über ein Uebersetzungsgetriebe angetriebenes hydrostatisches Getriebe vorhanden ist.

Eine solche Anlage ist aus der Zeitschrift "Hansa" 21/1982, Seite 1431 - 1434 bekannt. Bei dieser Anlage ist das hydrostatische Getriebe zwischen der Kurbelwelle der Antriebsmaschine und dem Generator angeordnet und dient zur Uebertragung der gesamten Leistung, die vom elektrischen Generator an das Bordnetz geliefert wird. Ausserdem hat das hydrostatische Getriebe die Aufgabe, die Frequenz des Generators zu regeln. Mit dem hydrostatischen Getriebe werden also grosse Leistungen übertragen, und zwar mit einem verhältnismässig schlechten Wirkungsgrad.

0235674

Der Erfindung liegt die Aufgabe zugrunde, eine Schiffsantriebsanlage der eingangs genannten Art zu schaffen, bei der der Wirkungsgrad für die Leistungsübertragung von der Antriebsmaschine zum Bordnetz wesentlich besser ist.

Diese Aufgabe wird erfindungsgemäss dadurch gelöst, dass zum Antrieb des Generators eine Nutzleistungsturbine vorgesehen ist, die über ein Untersetzungsgasgetriebe mit dem Generator gekuppelt ist und deren Gaseintritt mit dem Abgassystem der Hubkolbenbrennkraftmaschine verbunden ist, und dass das hydrostatische Getriebe hauptsächlich zum Regeln der Frequenz des Generators dient. In dieser Anlage wird also für die Uebertragung der im Generator umzuwandelnden Energie eine Gasturbine verwendet, und das hydrostatische Getriebe hat im wesentlichen nur noch die Aufgabe der Frequenzregelung. Mit der neuen Anlage wird erreicht, dass die Uebertragung des grössten Teils der Leistung mit einem guten Wirkungsgrad erfolgt, der wesentlich über dem Wirkungsgrad des hydrostatischen Getriebes liegt. Da in der erfindungsgemässen Anlage mit Hilfe des hydrostatischen Getriebes nur noch relativ kleine Leistungen übertragen werden, fällt hierbei der verhältnismässig schlechte Wirkungsgrad des hydrostatischen Getriebes nicht ins Gewicht. Der Gesamtwirkungsgrad der neuen Antriebsanlage ist also gegenüber dem der bekannten Anlage wesentlich verbessert.

Bei stationären Dieselbrennkraftmaschinen, die mit konstanter Drehzahl laufen und direkt einen elektrischen Generator antreiben, der seine Energie in ein elektrisches Netz liefert, ist es bekannt, an den Abgassammler eine Nutzleistungsgasturbine anzuschliessen, die über ein Untersetzungsgetriebe einen zweiten elektrischen Generator (Asynchron-Generator) antreibt, der seine Energie ebenfalls in das stationäre Netz liefert. Dabei diktiert der mit der Dieselbrennkraftmaschine direkt gekuppelte elektrische Generator immer die Netzfrequenz und somit auch die Drehzahl des Asynchron-Generators. In Schiffsanlagen ist jedoch die Netzkapazität viel zu klein, um die Frequenz eines Asynchron-Generators unter Kontrolle zu halten.

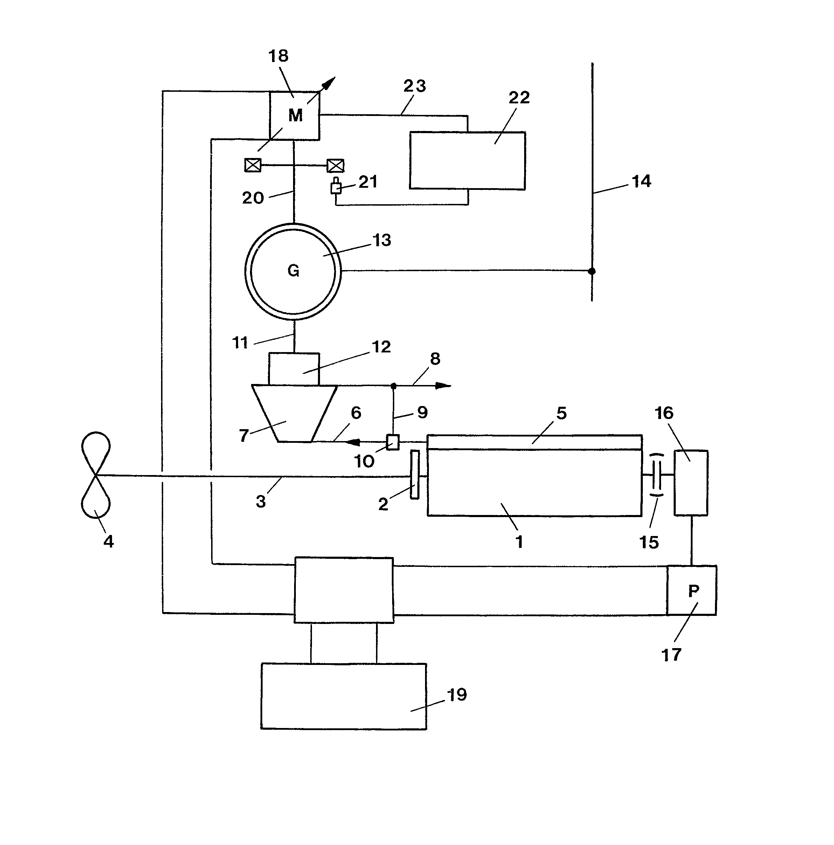

Ein Ausführungsbeispiel der Erfindung wird in der folgenden Beschreibung anhand der Zeichnung näher erläutert, die die Schiffsantriebs- und Bordnetzversorgungsanlage schematisch dargestellt zeigt.

Die Anlage weist eine Antriebsmaschine 1 auf, die nach dem Diesel-Zweitaktverfahren arbeitet und mehrere nicht dargestellte Zylinder enthält. Die Kurbelwelle der Antriebsmaschine 1 ist an ihrem in der Zeichnung linken Ende über eine Kupplung 2 mit einer Welle 3 verbunden, die an ihrem freien Ende einen Schiffsantriebspropeller 4 mit feststehenden Schaufeln trägt. Die Antriebsmaschine 1 ist mit einem Abgassammler 5 versehen, der über eine Leitung 6 mit dem Eintritt einer Nutzleistungsgasturbine 7 verbunden ist. Am Austritt dieser Turbine 7 ist eine Abgasleitung 8 angeschlossen. Die Turbine 7 kann mit einer Bypassleitung 9 überbrückt werden, die zwischen den Leitungen 6 und 8 angeschlossen ist, wobei an der Abzweigstelle der Bypassleitung 9 von der Leitung 6 eine Abgasabsperrklappe 10 vorgesehen ist. Die Nutzleistungsgasturbine 7 ist über eine Welle 11 unter Zwischenschaltung eines Untersetzungsgetriebes 12 mit einem elektrischen Generator 13 gekuppelt, der die in ihm erzeugte elektrische Leistung in ein Bordnetz 14 des Schiffes speist.

Das in der Zeichnung rechte Ende der Kurbelwelle der Antriebsmaschine 1 ist über eine Kupplung 15 mit einem Uebersetzungsgetriebe 16 verbunden, das eine hydrostatische Pumpe 17 antreibt. Diese Pumpe 17 ist Bestandteil eines hydrostatischen Getriebes, das zusammen mit einem hydrostatischen Motor 18 einen geschlossenen hydraulischen Druckmittelkreislauf bildet. Die Versorgung dieses Kreislaufes mit hydraulischem Druckmittel, z.B. Oel, erfolgt über eine Niederdruckstation 19, die ein Druckmittelreservoir, eine Zubringerpumpe, eine Ueberströmleitung mit Ueberströmventil, Filter usw. enthält. Der hydrostatische Motor 18 ist über eine Welle 20 ebenfalls mit dem elektrischen Generator 13 gekuppelt. Die Drehzahl der Welle 20 wird von einem Messfühler 21 erfasst, der den gemessenen Ist-Wert der Drehzahl einem Regler 22 zuführt, in dem dieser Ist-Wert mit einem Soll-Wert verglichen wird. Bei einer Abweichung zwischen Ist-Wert und Soll-Wert wird die Menge des den hydrostatischen Motor 18 durchströmenden Druckmittels verändert, wozu der Regler 22 über eine Signalleitung 23 mit einem Stellorgan des Motors 18 verbunden ist.

Die Antriebsmaschine 1 ist in üblicher, hier nicht dargestellter Weise mit einer Ladegruppe versehen, deren Turbine ebenfalls von Abgas aus dem Sammler 5 beaufschlagt ist und dadurch einen Verdichter antreibt, der die den Zylindern der Antriebsmaschine 1 zuzuführende Verbrennungsluft komprimiert.

Die beschriebene Anlage funktioniert wie folgt. Während des Betriebes der Antriebsmaschine 1 wird Abgas aus dem Sammler 5 über die Leitung 6 der Nutzleistungsgasturbine 7 zugeführt, die damit über das Untersetzungsgetriebe 12 den Generator 13 antreibt. Das Getriebe 12 reduziert die Turbinendrehzahl von beispielsweise 32 000 Umdrehungen pro Minute auf beispielsweise 1 200 Umdrehungen pro Minute

des Generators 13. Die im Generator 13 erzeugte elektrische Leistung wird dem Bordnetz 14 zugeführt. Die über die Turbine 7 dem Generator 13 zugeführte Energie bildet den Hauptbestandteil der ins Bordnetz 14 abgegebenen Energie.

Mit Hilfe des hydrostatischen Getriebes 17, 18 wird die Frequenz des elektrischen Generators 13 auf einen konstanten Wert geregelt. Falls der Energiebedarf des Bordnetzes 14 grösser ist als die von der Turbine 17 zugeführte Energie, so wird die fehlende Energie von der Antriebsmaschine 1 über das Uebersetzungsgetriebe 16 und das hydrostatische Getriebe 17, 18 dem Generator 13 zugeführt, der dann entsprechend mehr elektrische Energie dem Bordnetz 14 zuführt. Ist dagegen der Energiebedarf des Bordnetzes 14 kleiner als die über die Turbine 7 zugeführte Energie, so wird der Energieüberschuss über das hydraulische Getriebe 17, 18 und das Getriebe 16 an die Antriebsmaschine 1 abgegeben. Dabei wird im hydrostatischen Getriebe die Pumpe 17 zum Motor und der Motor 18 zur Pumpe. Da die Drehzahl der Kurbelwelle der Antriebsmaschine 1 wegen der feststehenden Schaufeln des Propellers 4 in einem grossen Bereich variiert, muss die Schluckmenge der Verstelleinheit 18 des hydrostatischen Getriebes ebenfalls in einem grossen Bereich variiert werden, damit die Drehzahl des Generators 13 immer konstant gehalten werden kann.

Im unteren Lastbereich der Antriebsmaschine 1 und bei einer Havarie der Turbine 7 wird mit Hilfe der Klappe 10 und der Bypassleitung 9 die Gaszufuhr aus dem Abgassammler 5 zur Turbine 7 gestoppt und in die Abasleitung 8 umgeleitet.

Im Prinzip das gleiche gilt für den Fall, in dem der Propeller mit Verstellschaufeln versehen ist, nur das dann Drehzahländerungen der Kurbelwelle in einem wesentlich kleineren Bereich stattfinden.

0235674

Abweichend von dem beschriebenen Beispiel kann das Uebersetzungsgetriebe 16 - statt von der Kurbelwelle - von der
Steuerwelle der Antriebsmaschine 1 oder auch von der Welle
3 angetrieben werden.

0235674

Patentansprüche

1. Anlage zum Antrieb eines Schiffes mittels einer nach dem Dieselverfahren arbeitenden, mit dem Schiffspropeller gekuppelten Zweitakt-Hubkolbenbrennkraftmaschine, mit einem ein Bordnetz speisenden elektrischen Generator, der seine Antriebsenergie aus der Hubkolbenbrennkraftmaschine bezieht, wobei ein aus Pumpe und Motor bestehendes, von der Brennkraftmaschine über ein Uebersetzungsgetriebe angetriebenes hydrostatisches Getriebe vorhanden ist, dadurch g e k e n n z e i c h n e t , dass zum Antrieb des Generators eine Nutzleistungsgasturbine vorgesehen ist, die über ein Untersetzungsgetriebe mit dem Generator gekuppelt ist und deren Gaseintritt mit dem Abgassystem der Hubkolbenbrennkraftmaschine verbunden ist, und dass das hydrostatische Getriebe hauptsächlich zum Regeln der Frequenz des Generators dient.

2. Anlage nach Anspruch 1, dadurch gekennzeichnet, dass die Anlage so ausgelegt ist, dass - wenn der Energiebedarf im Bordnetz grösser ist als die von der Nutzleistungsgasturbine gelieferte Energie - das Leistungsmanko von der Hubkolbenbrennkraftmaschine über das hydrostatische Getriebe dem Generator zugeführt wird oder - wenn der Energiebedarf im Bordnetz kleiner ist als die von der Nutzleistungsgasturbine gelieferte Energie - der Leistungsüberschuss über das hydrostatische Getriebe an die Hubkolbenbrennkraftmaschine abgegeben wird.

3. Anlage nach Anspruch 1 oder 2, dadurch gekennzeichnet, dass der Schiffspropeller mit feststehenden Schaufeln versehen ist.

0235674
Nummer der Anmeldung

## Europäisches Patentamt
## EUROPÄISCHER RECHERCHENBERICHT

EP 87 10 2270

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 099 241 (BRITISH SHIPBUILDERS) * Seite 3, Zeile 10 - Seite 6, Zeile 16; Figur 1 * | 1 | F 02 G 5/02 F 02 B 63/04 F 01 K 23/14 |
| Y | --- | 2,3 | |
| Y | FR-A-2 296 295 (S.E.M.T.) * Seite 1, Zeile 1 - Seite 6, Zeile 19; Figuren * --- | 2,3 | |
| A | WO-A-8 200 174 (OSTERGAARD) --- | | |
| D,A | HANSA, Band 119, Nr. 21, 1982, Seiten 1431-1434; W. KOSEAN: "Anwendung neuartiger Generatorantriebe an Bord von seegehenden Schiffen" ----- | | |

**RECHERCHIERTE SACHGEBIETE (Int. Cl.4)**

F 02 B
F 02 G
B 63 J
F 01 K

Der vorliegende Recherchenbericht wurde für alle Patentansprüche erstellt.

| Recherchenort | Abschlußdatum der Recherche | Prüfer |
|---|---|---|
| DEN HAAG | 11-06-1987 | KOOIJMAN F.G.M. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82